# EUROPÄISCHE PATENTSCHRIFT

(11) **EP 4 091 435 B1**
(45) Veröffentlichungstag und Bekanntmachung des Hinweises auf die Patenterteilung: **21.01.2026**
(21) Anmeldenummer: 22155908.1
(22) Anmeldetag: 09.02.2022
(51) Int. Cl.: A01F 29/22, A01D 43/08

(54) **VERFAHREN ZUR BESTIMMUNG DES SCHLEIFBEDARFS VON HÄCKSELMESSERN EINER HÄCKSELVORRICHTUNG**
METHOD FOR DETERMINING THE NEED TO SHARPEN CHOPPING KNIVES OF A CHOPPING DEVICE
PROCÉDÉ DE DÉTERMINATION DES BESOINS DE RECTIFICATION DES LAMES DE HACHAGE D'UN DISPOSITIF DE HACHAGE

(30) Priorität: 17.05.2021 DE 102021112650
(43) Veröffentlichungstag der Anmeldung: 23.11.2022
(73) Patentinhaber: CLAAS Selbstfahrende Erntemaschinen GmbH, 33428 Harsewinkel (DE)
(72) Erfinder: Heitmann, Christoph, 48231 Warendorf (DE); Neitemeier, Dennis, 59510 Lippetal (DE); Brune, Markus, 33428 Harsewinkel (DE); Hinz, Patrick, 33428 Greffen (DE)
(74) Vertreter: CLAAS Gruppe

(56) Entgegenhaltungen:
- EP-A1- 2 225 931
- EP-A1- 2 805 603
- EP-A1- 3 798 771
- EP-B1- 2 008 508
- DE-A1- 10 357 177
- DE-A1- 102019 112 965

## Beschreibung

Die vorliegende Erfindung betrifft ein Verfahren zur Bestimmung des Schleifbedarfs von Häckselmessern einer Häckselvorrichtung gemäß dem Oberbegriff des Anspruches 1. Weiterhin betrifft die Erfindung einen selbstfahrenden Feldhäcksler gemäß dem Oberbegriff des Anspruches 15.

Ein Verfahren zur Bestimmung des Schleifbedarfs von Häckselmessern einer Häckselvorrichtung eines selbstfahrenden Feldhäckslers, wobei ein Verschleißzustand durch eine Überwachungsvorrichtung zyklisch bestimmt wird, sowie ein selbstfahrender Feldhäcksler der eingangs genannten Art sind aus dem Stand der Technik bekannt.

So beschreibt die EP 2 008 508 B1 einen Feldhäcksler mit einer Kamera zur Erzeugung von Bildern der Schneiden von Häckselmessern einer Häckselvorrichtung. Die Bilder werden auf einem Monitor in einer Fahrerkabine des Feldhäckslers angezeigt und von einer Bedienperson hinsichtlich der Qualität der Schneiden bewertet. Die Bedienperson bestimmt anhand von Unregelmäßigkeiten im Verlauf der Schneide, ob ein weiterer Schleifvorgang notwendig ist, um die gewünschte Schneidschärfe zu erreichen.

Aus der EP 2 225 931 B1 ist ein Feldhäcksler sowie ein Verfahren zur Bestimmung des Schleifbedarfs von Häckselmessern bekannt, wonach anhand von Erntegutparametern, wie Erntegutart sowie Maschinenparametern, wie Erntegutdurchsatz und Schnittlänge, eine Prognose über den zu erwartenden Verschleißverlauf abgeleitet wird.

Die EP 3 738 429 A1 hat ein Fahrerassistenzsystem für einen Feldhäcksler zum Gegenstand, wobei mittels einer Überwachungseinrichtung der Verschleißzustand von Häckselmessern sowie der Abstand der Häckselmesser zur Gegenschneide mittels eines Soll-Ist-Vergleiches bestimmt wird. Aus dem bestimmten Verschleißzustand oder dem bestimmten Abstand der Häckselmesser zur Gegenschneide wird eine Prognose zum Verschleißzustand der Häckselmesser oder eine Prognose vom Zustand der Gegenschneide generiert, welche der automatischen Abschätzung des Zeitpunktes der Durchführung eines Schleifvorganges zugrunde gelegt werden. Dabei wird auch die Anzahl der durchzuführenden Schleifzyklen prognostiziert, um daraufhin einen geeigneten Zeitpunkt zu prognostizieren, um die Durchführung des laufenden Ernteprozesses durch die Durchführung des Schleifvorgangs nicht zu unterbrechen. Das Fahrerassistenzsystem informiert die Bedienperson durch eine Ausgabe auf einem Display darüber, dass eines oder mehrere Häckselmesser einen Schwellwert für die Schneidschärfe unterschritten haben. Daraufhin entscheidet die Bedienperson wann ein Schleifvorgang der Häckselmesser ausgeführt werden soll. DE 103 57 177 A1 oder DE 10 2019 112965 A1 zeigen gleichwohl Verfahren zur Bestimmung des Schleifbedarfs von Häckselmessern.

Dem vorstehend genannten Stand der Technik ist gemeinsam, dass die Bedienperson über das Erreichen eines kritischen Verschleißzustands informiert wird, jedoch bleibt die Bedienperson wegen des Fehlens eines geeigneten Vergleichsmaßstabes im Unklaren darüber, welchen konkreten Umfang ein durchzuführender Schleifprozess hat. Ausgehend vom vorstehend genannten Stand der Technik liegt der Erfindung die Aufgabe zugrunde, ein Verfahren zur Bestimmung des Schleifbedarfs von Häckselmessern einer Häckselvorrichtung sowie einen selbstfahrenden Feldhäcksler derart weiterzubilden, dass eine Bedienperson über den aktuell vorliegenden Verschleißzustand und den daraus resultierenden Aufwand für die Durchführung eines Schleifprozesses in einer für diese nachvollziehbareren Weise informiert wird und flexibler darauf reagieren kann.

Diese Aufgabe wird aus verfahrenstechnischer Sicht ausgehend vom Oberbegriff des Anspruchs 1 in Verbindung mit dessen kennzeichnenden Merkmalen gelöst. Aus vorrichtungstechnischer Sicht erfolgt eine Lösung der Aufgabe ausgehend vom Oberbegriff des nebengeordneten Anspruchs 15 in Verbindung mit dessen kennzeichnenden Merkmalen. Die hierauf jeweils folgenden, abhängigen Ansprüche geben jeweils vorteilhafte Weiterbildungen der Erfindung wieder.

Gemäß dem Anspruch 1 wird ein Verfahren zur Bestimmung des Schleifbedarfs von Häckselmessern einer Häckselvorrichtung eines selbstfahrenden Feldhäckslers vorgeschlagen, wobei ein Verschleißzustand durch eine Überwachungsvorrichtung zyklisch bestimmt wird. Erfindungsgemäß ist vorgesehen, dass die Überwachungsvorrichtung eine Eingabe-Ausgabe-Einheit umfasst, mittels der ein von einer Schleifvorrichtung herzustellender Soll-Zustand der Häckselmesser als Zielvorgabe eingegeben oder ausgewählt wird, und dass durch die Überwachungsvorrichtung in Abhängigkeit von dem Soll-Zustand und dem bestimmten Verschleißzustand, kontinuierlich, eine Information generiert und durch die Eingabe-Ausgabe-Einheit visualisiert wird, in welchem Maß der aktuell bestimmte Verschleißzustand von dem Soll-Zustand abweicht. Das erfindungsgemäße Verfahren ermöglicht es einer Bedienperson, einen Soll-Zustand durch Eingabe oder Auswahl vorzugeben, welche dessen Anforderungen an den, insbesondere optimalen, Zustand der Häckselmesser in einer jeweiligen Erntesituation entsprechen. Durch die Überwachungsvorrichtung wird daraufhin in Abhängigkeit von dem Soll-Zustand und dem bestimmten Verschleißzustand, insbesondere kontinuierlich, eine Information generiert und durch die Eingabe-Ausgabe-Einheit visualisiert, in welchem Maß der aktuell bestimmte Verschleißzustand der Häckselmesser, nachfolgend auch als Ist-Zustand bezeichnet, von dem Soll-Zustand abweicht. Die Bedienperson wird dabei über die Abweichung durch die zyklische Überwachung stets auf dem Laufenden gehalten. Zudem bedarf es im Unterschied zum Stand der Technik nicht der subjektiven Beurteilung des Ist-Zustandes der Häckselmesser durch die Bedienperson. Hierdurch wird es für die Bedienperson einfacher, den aktuell erforderlichen Schleifbedarf zu erfassen, um daraufhin die Durchführung von Schleifvorgängen besser planen zu können, beispielsweise bei einem Feldwechsel, bei auftretenden Wartezeiten, Tankstopps und dergleichen mehr.

Insbesondere kann als Soll-Zustand der Häckselmesser eine Schneidschärfe und/oder eine Anzahl von durchzuführenden Schleifzyklen eingegeben oder ausgewählt werden, nach deren Durchführung eine eingegebene oder ausgewählte Schneidschärfe erreicht wird. Die Schneidschärfe kann als absoluter oder relativer Wert eingegeben oder ausgewählt werden. Die Schneidschärfe als Soll-Zustand der Häckselmesser kann bevorzugt als prozentualer Anteilswert der Schneidschärfe eines neuen Häckselmessers vorgegeben werden. Alternativ oder zusätzlich kann eine Anzahl von Schleifzyklen durch die Bedienperson vorgegeben werden, die von der Schleifvorrichtung durchzuführen sind, bis die Häckselmesser den eingegebenen oder ausgewählten Soll-Zustand wieder erreicht haben.

Bevorzugt kann das Maß der Abweichung des aktuell bestimmten Verschleißzustandes vom eingegebenen oder ausgewählten Soll-Zustand als ein Betriebsparameter der Schleifvorrichtung visualisiert werden. Die Bedienperson wird auf diese Weise fortlaufend darüber in Kenntnis gesetzt, in welchem Verschleißzustand bzw. Ist-Zustand sich die Häckselmesser befinden. Insbesondere ist die Anzeige eines Betriebsparameters der Schleifvorrichtung als Indikator der Abweichung für die Bedienperson greifbarer, da es sich im Allgemeinen um für die Bedienperson vertraute Werte handelt, die es der Bedienperson besser ermöglichen, die Dauer und die Notwendigkeit des Einleitens eines Nachschleifvorganges einschätzen zu können.

Gemäß einer bevorzugten Weiterbildung kann von der Eingabe-Ausgabe-Einheit zumindest eine Vergleichsgröße für den einzugebenden oder auszuwählenden Soll-Zustand angezeigt werden. Die Vergleichsgröße kann als Richtwert bzw. Orientierungshilfe dienen. Insbesondere für ungeübte Bedienpersonen kann die Vorgabe der Vergleichsgröße eine sinnvolle Unterstützung im laufenden Betrieb des Feldhäckslers darstellen. Die Vergleichsgröße kann dabei sowohl herstellerspezifisches Wissen als auch Erfahrungswissen beinhalten.

Dabei kann als eine Vergleichsgröße die relative und/oder die absolute Schneidschärfe im Neuzustand von Häckselmessern und/oder ein an eine spezifische Erntesituation angepasster und optimierter Soll-Zustandswert zur Auswahl angezeigt werden. Die relative und/oder absolute Schneidschärfe als Vergleichsgröße lässt sich insbesondere durch eine dialogbasierte Abfrage der Erntesituation bestimmen. Dabei kann die Bedienperson beispielsweise die Erntegutart vorgeben. In Abhängigkeit von der Erntegutart, beispielsweise beim Häckseln von Mais oder Gras, werden unterschiedliche Größenordnungen beim Verschleiß der Häckselmesser toleriert, so dass der optimierte Soll-Zustandswert im Fall von beispielsweise Mais ein anderer, insbesondere höherer, ist als bei Gras. Denkbar ist auch die zusätzliche Abfrage von weiteren Randbedingungen, welche Einfluss auf den Verschleiß der Häckselmesser haben. Beispielsweise kann eine Randbedingung das Ernten unter sandigen Bedingungen sein. Anhand der Erntegutart und zusätzlicher durch Abfrage bestimmter Randbedingungen kann aus einer in einer Speichereinheit der Überwachungsvorrichtung hinterlegten Datenbank ein Wert für die relative Schneidschärfe abgerufen und als ein Vorschlag für die Vergleichsgröße angezeigt werden.

Gemäß einer bevorzugten Weiterbildung kann als Maß der Abweichung eine Anzahl von durch die Schleifvorrichtung durchzuführender Schleifzyklen zum Erreichen des eingegebenen oder ausgewählten Soll-Zustands verwendet werden. Vorzugsweise wird als Betriebsparameter der Schleifvorrichtung der Betrag der Anzahl von Schleifzyklen angezeigt, durch die sich der aktuell bestimmte Verschleißzustand als Ist-Zustand von dem eingegebenen oder ausgewählten Soll-Zustand unterscheidet. Der angezeigte Betrag kann eine positive oder negative Anzahl von Schleifzyklen sein, welche den Unterschied zwischen dem aktuellen Ist-Zustand und dem ausgewählten bzw. eingegebenen Soll-Zustand beschreiben. So steht eine positive Anzahl an Schleifzyklen für einen Ist-Zustand der Häckselmesser, welcher besser ist als der ausgewählte bzw. eingegebene Soll-Zustand. Entsprechend gibt eine negative Anzahl an Schleifzyklen für einen aktuellen Ist-Zustand der Häckselmesser die Abweichung von dem Soll-Zustand wieder, was zugleich der Anzahl von auszuführenden Schleifzyklen entspricht, nach deren Ausführung sich der durch die Bedienperson ausgewählte bzw. eingegebene Soll-Zustand der Häckselmesser einstellt.

Insbesondere ist die Anzeige der Anzahl bzw. des Betrags an Schleifzyklen als Größenordnung der Abweichung für die Bedienperson greifbarer, da es sich um einen für die Bedienperson vertrauten Parameter handelt, der es der Bedienperson besser ermöglichen, die Dauer und die Notwendigkeit des Einleitens eines Nachschleifvorganges einschätzen zu können.

Insbesondere können von der Eingabe-Ausgabe-Einheit Vergleichsbilder für den Verschleißzustand eines oder mehrerer Häckselmesser angezeigt werden, welche den aktuell bestimmten Verschleißzustand und einen mit dem Soll-Zustand korrespondierenden Verschleißzustand wiedergeben. Neben der Anzeige der Abweichung als Anzahl bzw. Betrag an durchzuführenden Schleifzyklen kann somit zusätzlich der Ist-Zustand der Häckselmesser der Bedienperson angezeigt und dem Soll-Zustand gegenübergestellt werden. Hierzu muss die Bedienperson die Fahrerkabine des Feldhäckslers nicht verlassen. Der Bedienperson kann auch nur ein einzelnes Messer oder können mehrere ausgesuchte Messer angezeigt werden, welches bzw. welche ganz oder teilweise beschädigt sind. Dies kann sinnvoll sein, wenn z.B. einzelne Messer durch Fremdkörper beschädigt wurden. Die Bedienperson kann entscheiden, ob sie die beschädigten Messer austauscht. Besonders bevorzugt können mehrere Vergleichsbilder nebeneinander oder übereinander angeordnet durch die Eingabe-Ausgabe-Einheit dargestellt werden, welche den Neuzustand von Häckselmessern und/oder den eingestellten oder ausgewählten Soll-Zustand und/oder einen sonstigen schneidschärfespezifischen Referenzwert und/oder den aktuellen Ist-Zustand zeigen.

Hierbei können für die Anzeige der den Soll-Zustand wiedergebenden Vergleichsbilder diese in Abhängigkeit von einer Vorgabe für Ernteparametern und/oder Maschinenparametern aus einer in einer Speichereinheit der Überwachungsvorrichtung hinterlegten Datenbank ausgewählt werden.

Weiterhin können Vergleichsbilder, die den aktuell bestimmten Verschleißzustand wiedergeben, von einer optischen Erfassungsvorrichtung aufgenommen werden, die insbesondere der Schleifvorrichtung zugeordnet sein kann. Die Zuordnung zu der Schleifvorrichtung ist vorteilhaft, da die optische Erfassungsvorrichtung in geringerem Maße dem Erntegutstrom ausgesetzt ist.

Des Weiteren kann die Eingabe-Ausgabe-Einheit einen berührungssensitiven Bildschirm umfassen, wobei bei einer Auswahl eines Vergleichsbildes durch Berührung für die Darstellung von einem Fenstermodus in einen Vollbildmodus oder umgekehrt wechselt wird. Hierdurch lassen sich Details in den Vergleichsbildern aufgrund der vergrößerten Darstellung im Vollbildmodus besser erkennen.

Gemäß einer bevorzugten Weiterbildung kann von der Eingabe-Ausgabe-Einheit ein virtuelles Bedienfeld angezeigt werden, mit welchem eine manuelle Auswahl des Soll-Zustand durchgeführt wird. Dabei kann es sich beispielsweise um ein als ein Taster ausgeführtes Bedienfeld handeln, welches aus in der Datenbank hinterlegten Soll-Zuständen einen als Vorgabe auswählt und einstellt. Dabei kann es sich insbesondere um herstellerspezifische Vorgaben handeln.

Insbesondere kann von der Eingabe-Ausgabe-Einheit ein virtuelles Bedienelement angezeigt werden, mit welchem eine manuelle Auswahl des Soll-Zustand durchgeführt wird. Hierzu kann das virtuelle Bedienelement als ein verschieblicher oder drehbarer Regler ausgeführt sein, das von der Bedienperson betätigt wird, um einen spezifischen Soll-Zustand einzugeben.

Bevorzugt kann die durch die Eingabe-Ausgabe-Einheit visualisierte Information als ein Zahlenwert, als eine Säule und/oder als ein zeitlicher Verlauf dargestellt werden. Bevorzugt wird die Information als ein Zahlenwert in einem Anzeigefeld von der Eingabe-Ausgabe-Einheit dargestellt.

Gemäß einer Ausführungsform kann vor der Umsetzung einer Eingabe oder Auswahl des Soll-Zustands eine Berechtigungsabfrage durchgeführt werden. Dies ermöglicht es, die Einstellung restriktiv zu handhaben, so dass einzelne Bedienpersonen oder definierbare Personenkreise insbesondere von einer Auswahl oder Eingabe eines Soll-Zustands ausgeschlossen oder zumindest in der Eingabe eingeschränkt werden können.

Nach einer weiteren Lehre gemäß dem Anspruch 15, welcher eine eigenständige Bedeutung zukommt, wird ein selbstfahrender Feldhäcksler zur Verwendung in einem vorschlagsgemäßen Verfahren beansprucht. Auf alle Ausführungen, die geeignet sind, den selbstfahrenden Feldhäcksler als solchen oder seine Verwendung zu beschreiben, darf verwiesen werden.

Die vorliegende Erfindung wird nachstehend anhand eines in den Zeichnungen dargestellten Ausführungsbeispieles näher erläutert.

Es zeigen:
- Fig. 1: eine schematische Darstellung eines Feldhäckslers;
- Fig. 2: eine Detailansicht des Feldhäckslers gemäß Fig. 1;
- Fig. 3: eine schematische Darstellung einer Überwachungsvorrichtung des Feldhäckslers; und
- Fig. 4: eine schematische Darstellung einer Bedienanzeige einer Eingabe-Ausgabe-Einheit des Feldhäckslers.

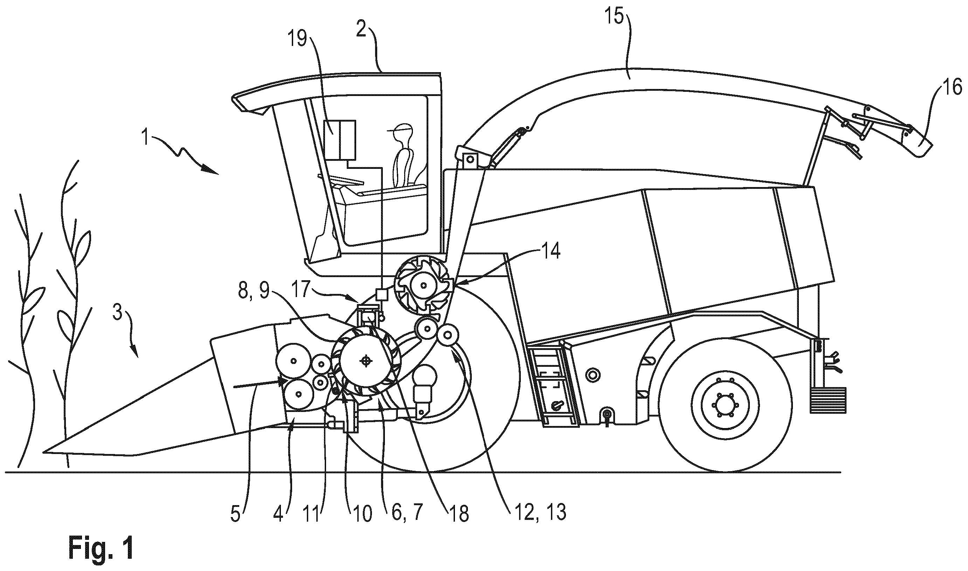

Figur 1 zeigt schematisch einen Feldhäcksler 1 mit einer Fahrerkabine 2, der in seinem frontseitigen Bereich einen Erntevorsatz 3, beispielsweise ein Maisgebiss, aufnimmt. Im rückwärtigen Bereich des Erntevorsatzes 3 sind diesem sogenannte Einzugs- und Vorpresswalzen 4 zugeordnet, die einen Erntegutstrom 5 aus dem Erntevorsatz 2 kommend annehmen, verdichten und in ihrem rückwärtigen Bereich an eine Häckselvorrichtung 6 übergeben. In noch näher zu beschreibender Weise umfasst die Häckselvorrichtung 6 eine Häckseltrommel 7, die mit Häckselmessern 8 einer Häckselmesseranordnung 9 bestückt ist. Die umlaufenden Häckselmesser 8 werden im Einzugsbereich 10 der Häckseltrommel 7 an einer sogenannten Gegenschneide 11, über die der zu zerkleinernde Erntegutstrom 5 gefördert wird, vorbeibewegt. Im rückwärtigen Bereich der Häckseltrommel 7 wird das zerkleinerte Erntegut 5 sodann entweder an eine als sogenannter Cracker 12 ausgeführte Nachzerkleinerungseinrichtung 13 oder direkt an eine Nachbeschleunigungseinrichtung 14 übergeben. Während die Nachzerkleinerungseinrichtung 13 die körnigen Bestandteile des Erntegutstromes 5, etwa Maiskörner, weiter zerkleinert, beschleunigt der Nachbeschleuniger 14 den Erntegutstrom 5 in einer Weise, dass dieser durch einen Auswurfkrümmer 15 bewegt und endseitig im Bereich einer Auswurfklappe 16 aus dem Feldhäcksler 2 austreten und an ein nicht dargestelltes Transportfahrzeug übergeben werden kann. Zudem ist der Häckseltrommel 7 umfangsseitig eine an sich bekannte und daher hier nicht im Detail beschriebene Schleifvorrichtung 17 zugeordnet, deren Schleifstein 18 horizontal über die Breite der Häckseltrommel 7 bewegt wird, um jedes am Umfang der Häckseltrommel 7 positionierte Häckselmesser 8 zu schleifen. Zwecks Aktivierung oder Deaktivierung des Messerschleifvorganges ist der Schleifvorrichtung 17 eine Eingabe-Ausgabe-Einheit 19 zugeordnet.

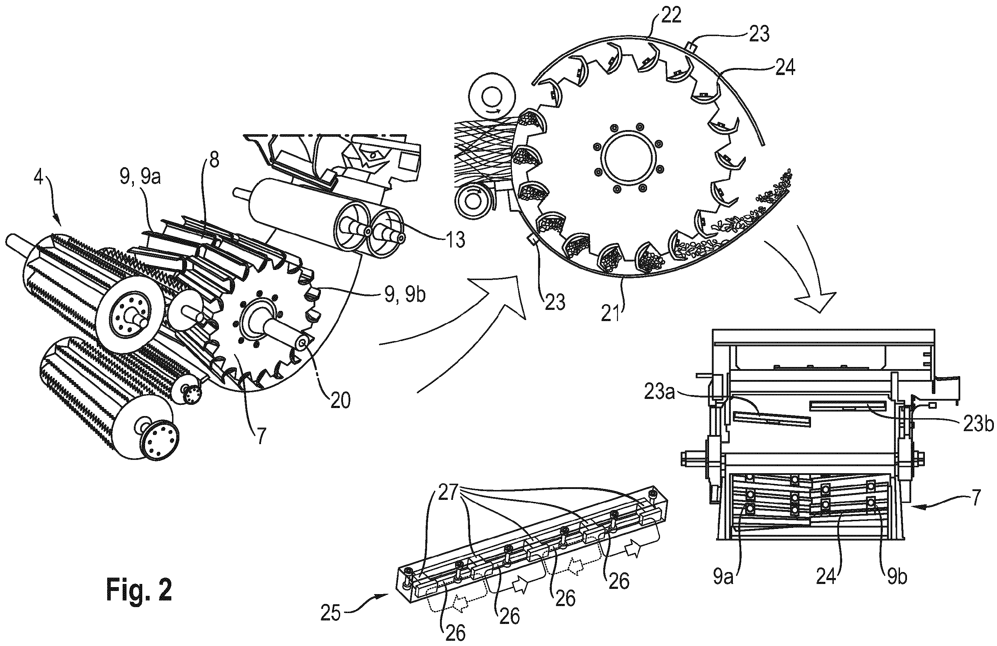

Gemäß Figur 2 umfasst die Häckselmesseranordnung 9 rechts- und linksseitige Häckselmesseranordnungen 9a, 9b, wobei jede Häckselmesseranordnung 9a, 9b eine Vielzahl am Umfang der Häckseltrommel 7 schräg zur Drehachse 20 der Häckseltrommel 7 positionierte Häckselmesser 8 umfasst. Die Häckseltrommel 7 wird untenseitig von einem Trommelboden 21 ummantelt. Obenseitig wird die Häckseltrommel 7 von einer Trommelrückwand 22 umschlossen. Die Sensoranordnung 23 kann gemäß dem in Figur 2 dargestellten Ausführungsbeispiel entweder an der Trommelrückwand 22 oder am Trommelboden 21 positioniert sein. Es ist auch denkbar, dass zugleich sowohl am Trommelboden 21 als auch an der Trommelrückwand 22 eine Sensoranordnung 23 angeordnet ist. In Abhängigkeit von der Positionierung der Sensoranordnung 23 können der Trommelboden 21 und/oder die Trommelrückwand 22 vorzugsweise aus Edelstahl bestehen. Unabhängig von der konkreten Positionierung sind jeder Häckseltrommel 7 zumindest 2 Sensoranordnungen 23a, 23b in der Weise zugeordnet, dass jeweils eine der Sensoranordnungen 23a, 23b der jeweils zugehörigen Häckselmesseranordnung 9a, 9b zugeordnet ist, wobei jede Sensoranordnung 23a, 23b die Schneidkante 24 des jeweiligen Häckselmessers 8 vollständig überdeckt, sodass jede Schneidkante 24 über ihre gesamte Länge hinweg durch die jeweilige Sensoranordnung 23a, 23b detektiert werden kann. Weiter liegt es im Rahmen der Erfindung, dass die jeweilige Sensoranordnung 23a, 23b entweder parallel zur Drehachse 20 der Häckseltrommel 7 oder parallel zur Schneidkante 24 der Häckselmesser 8 am Trommelboden 21 und/oder der Trommelrückwand 22 positioniert ist. Die rechte untere Darstellung in Figur 2 zeigt nur beispielhaft die möglichen Ausrichtungen der Sensoranordnungen 23a, 23b in einer einzigen Darstellung. Vorzugsweise werden alle Sensoranordnungen 23a, 23b entweder parallel zur Drehachse 20 der Häckseltrommel 7 oder parallel zur Schneidkante 24 der Häckselmesser 8 positioniert sein. Im dargestellten Ausführungsbeispiel sind die Sensoranordnungen 23a, 23b als Induktionssensoren 25 ausgeführt, wobei jede Sensoranordnung 23 ein oder mehrere magnetische Erregeranordnungen 26 sowie jeweils eine mit diesen zusammenwirkende Polanordnung 27 umfasst. Weitere Details zu den Sensoranordnungen zur Erfassung des Verschleißzustandes der Häckselmesser 8 ergeben sich der EP 3 363 281 A1, auf deren Offenbarungsgehalt hiermit vollumfänglich Bezug genommen wird.

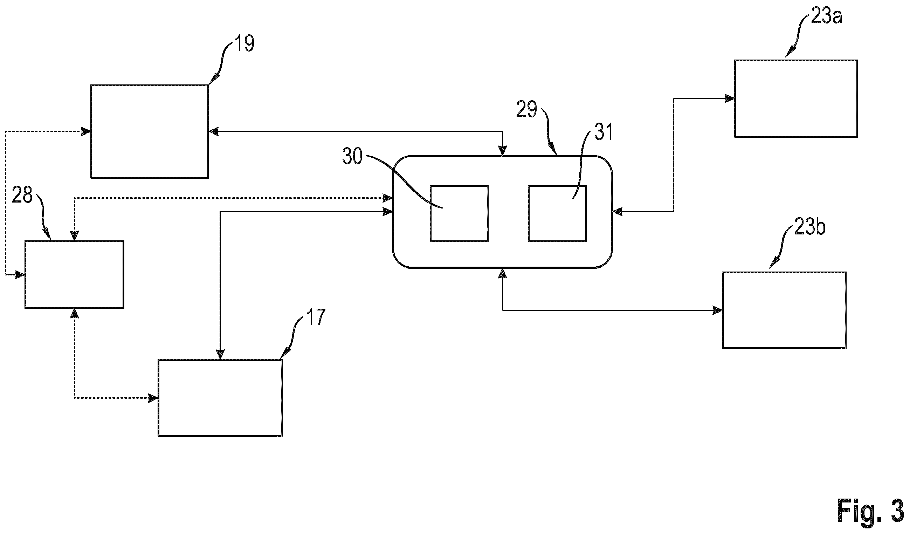

In Fig. 3 ist schematisch eine Überwachungsvorrichtung 29 dargestellt, welche der Ansteuerung der Schleifvorrichtung 17 dient. Die Überwachungsvorrichtung 29 ist mit der Schleifvorrichtung 17, der Eingabe-Ausgabe-Einheit 19 sowie den Sensoranordnungen 23a, 23b signaltechnisch verbunden. Die Überwachungsvorrichtung 29 umfasst eine Recheneinheit 30 sowie eine Speichereinheit 31. In der Speichereinheit 31 kann unter andrem eine Datenbank hinterlegt sein. Die Überwachungsvorrichtung 29 dient der Auswertung der von den Sensoranordnungen 23a, 23b bereitgestellten Signalen, aus denen der aktuelle Verschleißzustand der Häckselmesser 8 zyklisch bestimmt wird. Mittels der Eingabe-Ausgabe-Einheit 19 der Überwachungsvorrichtung 29 wird ein von der Schleifvorrichtung 17 herzustellender Soll-Zustand der Häckselmesser 8 als Zielvorgabe eingegeben oder ausgewählt. Der Feldhäcksler 1 kann zudem eine übergeordnete Steuerungsvorrichtung 28 umfassen, welche der Ansteuerung der Arbeitsorgane des Feldhäckslers 1 dient.

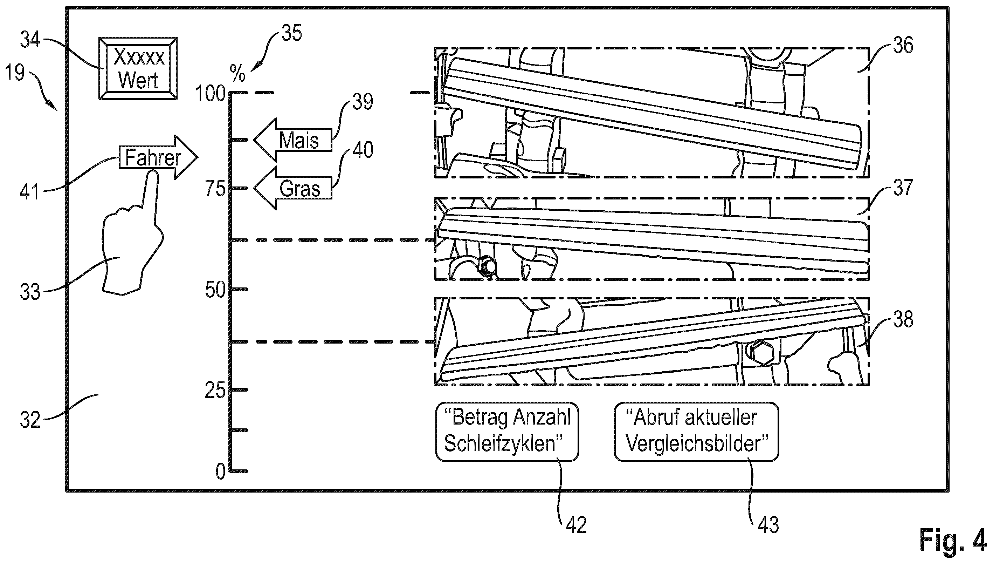

Die Darstellung in Fig. 4 zeigt eine schematische Darstellung einer Bedienanzeige der Eingabe-Ausgabe-Einheit 19 des Feldhäckslers 1. Die Eingabe-Ausgabe-Einheit 19 umfasst einen, insbesondere berührungssensitiven, Bildschirm 32. Die auf dem Bildschirm 32 dargestellte Anzeige gibt beispielhaft eine Einstellsituation wieder, in welcher eine Bedienperson 33, symbolisch durch eine Hand dargestellt, einen von der Schleifvorrichtung 17 herzustellenden Soll-Zustand der Schneidschärfe der Häckselmesser 8 eingeben, d.h. nach eigenem Ermessen vorgeben, oder auswählen kann. Hierfür bieten sich der Bedienperson 33 mehrere Optionen, die nachfolgend erläutert werden.

In einer Betriebssituation, in welcher die Bedienperson 33 unsicher ist, welchen Soll-Zustand sie vorgeben soll, besteht die Möglichkeit durch das Betätigen eines virtuellen Bedienfeldes 34 einen herstellerseitig vorgegebenen Wert für einen Soll-Zustand auszuwählen. Herstellerseitige Werte der Soll-Zustände für unterschiedliche Erntegutparameter und Betriebsparameter, wie Erntegutart, Ernteregion und/oder Maschinentyp, können in der Speichereinheit abrufbar hinterlegt sein.

Eine Skala 35 zeigt eine relative Schneidschärfe der Häckselmesser 8 an. Die Skala 35 reicht dabei von 0% bis 100%. Alternativ oder zusätzlich kann auch ein Absolutwert für die Schneidschärfe der Häckselmesser 8 angezeigt werden. Gemäß einer bevorzugten Weiterbildung kann von der Eingabe-Ausgabe-Einheit 19 zumindest eine Vergleichsgröße für den einzugebenden oder auszuwählenden Soll-Zustand angezeigt werden. Die Vergleichsgröße kann dabei als Richtwert bzw. Orientierungshilfe dienen. Dabei kann als eine Vergleichsgröße die relative Schneidschärfe im Neuzustand von Häckselmessern 8 und/oder ein an eine spezifische Erntesituation angepasster und optimierter Soll-Zustandswert zur Auswahl angezeigt werden. Zusätzlich können, um die Bedienperson 33 bei der Auswahl oder Eingabe zu unterstützen, optional mehrere Vergleichsbilder 36, 37, 38 dargestellt werden, die jeweils unterschiedlichen Werten auf der Skala 35 für die relative Schneidschärfe zugeordnet sind.

So zeigt das Vergleichsbild 36 ein Häckselmesser 8 in seinem Neuzustand mit einer relativen Schneidschärfe von 100%. Das nachfolgende Vergleichsbild 37 zeigt ein Häckselmesser 8, welches bereits einen deutlichen Verschleiß aufweist und dessen relative Schneidschärfe zwischen 50% und 75% liegt. Im dritten Vergleichsbild 38 ist beispielhaft ein Häckselmesser 8 gezeigt, welches aufgrund des fortgeschrittenen Verschleißes die Effizienz des Häckselvorganges negativ beeinflusst. Insbesondere nimmt der Leistungsbedarf der Häckselvorrichtung zu. Ebenfalls beeinflusst wird die erreichbare Häckselqualität des Erntegutes. Für eine vergrößerte Darstellung eines der Vergleichsbilder 36, 37, 38 kann durch die Berührung des jeweiligen Vergleichsbildes 36, 37, 38 die Darstellung von einem Fenstermodus in einen Vollbildmodus oder umgekehrt gewechselt werden.

Insbesondere können durch die Eingabe-Ausgabe-Einheit 19 Vergleichsbilder für den Verschleißzustand der Häckselmesser 8 angezeigt werden, welche den aktuell bestimmten Verschleißzustand und einen mit dem Soll-Zustand korrespondierenden Verschleißzustand wiedergeben. Neben der Anzeige der Abweichung kann somit zusätzlich der Ist-Zustand der Häckselmesser 8 der Bedienperson 33 angezeigt werden. Hierzu muss die Bedienperson 33 die Fahrerkabine 2 des Feldhäckslers 1 nicht verlassen. Besonders bevorzugt können mehrere Vergleichsbilder 36, 37, 38 nebeneinander oder übereinander angeordnet durch die Eingabe-Ausgabe-Einheit 19 dargestellt werden, welche den Neuzustand von Häckselmessern, den eingestellten oder ausgewählten Soll-Zustand oder einen sonstigen schneidschärfespezifischen Referenzwert und/oder den aktuellen Ist-Zustand zeigen.

Weiterhin können Vergleichsbilder, die den durch die Überwachungsvorrichtung 29 aktuell bestimmten Verschleißzustand wiedergeben, von einer - nicht dargestellte - optischen Erfassungsvorrichtung aufgenommen werden, die insbesondere der Schleifvorrichtung 17 zugeordnet sein kann. Die Zuordnung zu der Schleifvorrichtung 17 ist vorteilhaft, da die optische Erfassungsvorrichtung in geringerem Maße dem Erntegutstrom 5 ausgesetzt ist. Diese Vergleichsbilder, die den aktuellen Verschleißzustand wiedergeben, können beispielsweise im Zusammenhang mit einem zu generierenden Warnhinweis angezeigt werden. Zusätzlich oder alternativ kann die Bedienperson 33 diese Vergleichsbilder unabhängig davon abrufen. Hierzu kann beispielhaft ein virtuelles Bedienelement 43 mit der Bezeichnung "Abruf aktueller Vergleichsbilder" angezeigt werden, um ein mit dem Ist-Zustand der Häckselmesser 8 korrespondierendes Vergleichsbild anzuzeigen.

Bei einer Betätigung des virtuellen Bedienfeldes 34 durch die Bedienperson 33 wird ein, insbesondere für die zu verarbeitende Erntegutart, spezifischer Wert für einen Soll-Zustand vorgegeben.

Um die zu verarbeitende Erntegutart und gegebenenfalls weitere Erntegutparameter und Betriebsparameter vorab zu bestimmen, kann eine dialogbasierte Abfrage durchgeführt werden. Dabei kann die Bedienperson 33 beispielsweise die Erntegutart vorgeben. Denkbar ist auch die zusätzliche Abfrage von weiteren Randbedingungen, welche Einfluss auf den Verschleiß der Häckselmesser haben. Beispielsweise kann eine Randbedingung das Ernten unter sandigen Bedingungen sein. Anhand der Erntegutart kann aus der in der Speichereinheit 30 der Überwachungsvorrichtung 29 hinterlegten Datenbank ein Wert für die relative Schneidschärfe abgerufen werden. Zumindest teilweise lassen sich die Erntegutparameter und Betriebsparameter durch zusätzliche, bereits an dem Feldhäcksler 1 vorhandene Sensoreinrichtungen, wie beispielsweise ein Positionssensor oder eine Vorfeldkamera, selbsttätig bestimmen.

Nach der Betätigung des virtuellen Bedienfeldes 34 für die Auswahl des Soll-Zustand wird genau ein Indikator 39 oder 40 neben der Skala 35 angezeigt. Im exemplarischen Fall der Erntegutart "Mais" wird der Indikator 39 angezeigt und im exemplarischen Fall der Erntegutart "Gras" der Indikator 40.

Entscheidet sich die Bedienperson 33 für eine manuelle Eingabe des Soll-Zustands, wird durch die Eingabe-Ausgabe-Einheit ein virtuelles Bedienelement 41 angezeigt, mit welchem eine manuelle Auswahl des Soll-Zustand durchgeführt werde kann. Hierzu kann das virtuelle Bedienelement 41 als ein verschieblicher oder drehbarer Regler ausgeführt sein. Im dargestellten Ausführungsbeispiel ist das virtuelle Bedienelement 41 als ein Pfeil ausgeführt, welches entlang der Skala 35 virtuell verschieblich ist.

In Abhängigkeit von der Vorgehensweise der Bedienperson 33, den Soll-Zustand mittels des Bedienelementes 41 selbst manuell einzugeben oder durch das Betätigen des Bedienfeldes 34 auszuwählen, wird jeweils nur genau ein Indikator 39 oder 40 oder das Bedienfeld 34 angezeigt, welcher den eingegebenen oder ausgewählten Soll-Zustand anzeigen.

Durch die Überwachungsvorrichtung 29 wird in Abhängigkeit von dem Soll-Zustand und dem bestimmten Verschleißzustand, insbesondere kontinuierlich, eine Information generiert und durch die Eingabe-Ausgabe-Einheit 19 visualisiert wird, in welchem Maß der aktuell bestimmte Verschleißzustand von dem Soll-Zustand abweicht. Wie bereits ausgeführt, wird als Soll-Zustand der Häckselmesser 8 eine relative Schneidschärfe und/oder eine Anzahl von durchzuführenden Schleifzyklen eingegeben oder ausgewählt, nach deren Durchführung eine als Soll-Zustand eingegebene oder ausgewählte relative Schneidschärfe erreicht wird. Hierzu wird das Maß der Abweichung vom aktuellen Verschleißzustand zum eingegebenen oder ausgewählten Soll-Zustand als ein Betriebsparameter der Schleifvorrichtung 17 visualisiert. Vorzugsweise wird als Betriebsparameter der Schleifvorrichtung 17 der Betrag der Anzahl von Schleifzyklen angezeigt, durch die sich der Ist-Zustand von dem Soll-Zustand unterscheidet. So wird als Maß der Abweichung eine Anzahl von durch die Schleifvorrichtung 17 durchzuführender Schleifzyklen zum Erreichen des eingegebenen oder ausgewählten Soll-Zustands verwendet.

Bevorzugt kann die durch die Eingabe-Ausgabe-Einheit 19 visualisierte Information als ein Zahlenwert, als eine Säule und/oder als ein zeitlicher Verlauf in einem separaten Anzeigefeld 42 dargestellt werden.

Im einfachsten Fall wird durch die Eingabe-Ausgabe-Einheit 19 in dem Anzeigefeld 42 genau ein Zahlenwert für die Anzahl von Schleifzyklen angezeigt, welche die Abweichung des aktuellen Ist-Zustandes der Häckselmesser 8 von dem Soll-Zustand wiedergibt. Die Anzeige der Anzahl von Schleifzyklen als reiner Zahlenwert, hat den Vorteil, dass dies ein der Bedienperson 33 bekannter Vergleichsmaßstab ist.

Der im Anzeigefeld 42 angezeigte Betrag kann eine positive oder negative Anzahl von Schneidzyklen sein, welche den Unterschied zwischen dem aktuellen Ist-Zustand und dem ausgewählten bzw. eingegebenen Soll-Zustand beschreiben. So steht eine positive Anzahl an Schleifzyklen für einen Ist-Zustand der Häckselmesser 8, welcher besser ist als der ausgewählte bzw. eingegebene Soll-Zustand. Entsprechend gibt eine negative Anzahl an Schleifzyklen für einen aktuellen Ist-Zustand der Häckselmesser 8 die Abweichung von dem Soll-Zustand wieder, was zugleich der Anzahl von auszuführenden Schleifzyklen entspricht, nach deren Ausführung sich der durch die Bedienperson ausgewählte bzw. eingegebene Soll-Zustand der Häckselmesser 8 einstellt.

Beispielsweise zeigt der Wert "0" für die Anzahl an Schneidzyklen im Anzeigefeld 42 der Bedienperson 33 an, dass der Soll-Zustand erreicht ist oder noch besteht.

Ein negativer Wert "-10" für die Anzahl an Schleifzyklen gibt an, dass der Ist-Zustand der Häckselmesser 8 zehn Schleifzyklen vom Soll-Zustand entfernt ist, d.h. dass die Abweichung zehn auszuführende Schleifzyklen beträgt, um den Soll-Zustand der Häckselmesser 8 wiederherzustellen.

Ein negativer Wert "-27" für die Anzahl an Schleifzyklen als Abweichung gibt an, dass der Ist-Zustand der Häckselmesser 8 siebenundzwanzig Schleifzyklen vom Soll-Zustand entfernt ist.

Ein positiver Wert "+5" für die Anzahl an Schleifzyklen als Abweichung gibt an, dass der Ist-Zustand der Häckselmesser 8 fünf Schleifzyklen vom Soll-Zustand entfernt ist, wobei die positive Anzahl an Schleifzyklen aussagt, dass der aktuelle Ist-Zustand der Häckselmesser 8 fünf Schleifzyklen besser als der Soll-Zustand ist.

Die Bedienperson 33 kann mittels Eingabe-Ausgabe-Einheit 19 einen Sollwert für die Anzahl an durchzuführenden Schleifzyklen eingeben, deren Ausführung zur Herstellung des gewählten oder eingestellten Soll-Zustands erforderlich ist. Wird beispielsweise als Sollwert für die Anzahl an durchzuführenden Schleifzyklen der Wert "20" eingegeben, so wird die Bedienperson 33 durch eine von der Überwachungsvorrichtung 29 generierte Warnmeldung darüber in Kenntnis gesetzt, dass der Ist-Zustand der Häckselmesser 8 einer Abweichung mit dem Wert "-20" entspricht.

Gemäß einem Beispiel zur Darstellung des Funktionsablaufs gibt die Bedienperson 33 als Soll-Zustand der Häckselmesser 8 eine Schneidschärfe von 80% vor. Des Weiteren gibt die Bedienperson 33 als Sollwert für die Anzahl an durchzuführenden Schleifzyklen zur Erreichung des Soll-Zustands den Wert "30" vor.

Während des Häckselvorganges wird im Anzeigefeld 42 als Abweichung des Ist-Zustands Soll-Zustand vom Soll-Zustand der Wert "-23" angezeigt. Die Abweichung liegt unterhalb des Sollwertes für die Anzahl an durchzuführenden Schleifzyklen. Tritt in dieser Situation eine Unterbrechung auf, die beispielsweise auf eine Unterbrechung in der Transportlogistik zurückzuführen ist, kann die Bedienperson 33 das Durchführen der dreiundzwanzig Schleifvorgänge veranlassen, um den Soll-Zustand der Häckselmesser 8 wiederherzustellen, obwohl der Sollwert von "-30" noch nicht erreicht ist. Der im Anzeigefeld 42 angezeigte Betrag der Abweichung als Anzahl von Schleifzyklen beträgt dann "0". Der Häckselvorgang kann fortgesetzt werden.

Die Bedienperson kann aber abweichend vom vorstehend beschriebenen Vorgehen das Durchführen von dreißig Schleifvorgänge veranlassen, so dass sich ein Ist-Zustand für die Schneidschärfe der Häckselmesser 8 einstellt, der oberhalb des Soll-Zustands liegt. Dies wird der Bedienperson dadurch veranschaulicht, dass der im Anzeigefeld 42 angezeigte Betrag der Abweichung als Anzahl von Schleifzyklen dann "+7" beträgt.

Werden beispielsweise statt der erforderlichen dreiundzwanzig Schleifvorgänge lediglich zwanzig Schleifvorgänge durch die Bedienperson verlasst, so wird der Soll-Zustand nicht erreicht. Die daraus resultierende Abweichung des erreichten Ist-Zustands wird im Anzeigefeld 42 durch den Betrag "-3" als Abweichung der Anzahl an Schleifzyklen angezeigt. Der Häckselvorgang kann ebenfalls fortgesetzt werden, jedoch bereits mit einer Abweichung von drei Schleifzyklen vom Soll-Zustand.

Wird während des Häckselvorgangs als Abweichung der Wert "-30" für die Anzahl an Schleifzyklen im Anzeigefeld 42 angezeigt, kann die Bedienperson 33 durch einen Warnhinweis auf das Erreichen der eingestellten Abweichung des Ist-Zustands vom Soll-Zustand hingewiesen werden. Unabhängig von dem Warnhinweis kann die Bedienperson 33 den Häckselvorgang fortsetzen, beispielsweise wenn der Abschluss des laufenden Ernteprozesses zeitlich gesehen kurzfristig absehbar ist. Entsprechend stellt sich am Ende des Ernteprozesses eine höhere Abweichung ein, beispielsweise zeigt das Feld "-40" als Anzahl der Schleifzyklen an, deren Durchführung notwendig ist, um ausgehend vom aktuellen Verschleißzustand den eingestellten Soll-Zustand wieder zu erreichen.

### Bezugszeichenliste

| | | | |
|---|---|---|---|
| 1 | Feldhäcksler | 30 | Recheneinheit |
| 2 | Fahrerkabine | 31 | Speichereinheit |
| 3 | Erntevorsatz | 32 | Bildschirm |
| 4 | Einzugs- und Vorpresswalzen | 33 | Bedienperson |
| 5 | Erntegutstrom | 34 | Bedienfeld |
| 6 | Häckselvorrichtung | 35 | Skala |
| 7 | Häckseltrommel | 36 | Vergleichsbild |
| 8 | Häckselmesser | 37 | Vergleichsbild |
| 9 | Häckselmesseranordnung | 38 | Vergleichsbild |
| 9a | rechtsseitige Häckselmesseranordnung | 39 | Indikator |
| 9b | linksseitige Häckselmesseranordnung | 40 | Indikator |
| 10 | Einzugsbereich | 41 | Bedienelement |
| 11 | Gegenschneide | 42 | Anzeigefeld |
| 12 | Cracker | 43 | Bedienelement |
| 13 | Nachzerkleinerungseinrichtung | | |
| 14 | Nachbeschleunigungseinrichtung | | |
| 15 | Auswurfkrümmer | | |
| 16 | Auswurfklappe | | |
| 17 | Schleifvorrichtung | | |
| 18 | Schleifstein | | |
| 19 | Eingabe-Ausgabe-Einheit | | |
| 20 | Drehachse | | |
| 21 | Trommelboden | | |
| 22 | Trommelrückwand | | |
| 23 | Sensoranordnung | | |
| 23a | Sensoranordnung | | |
| 23b | Sensoranordnung | | |
| 24 | Schneidkante | | |
| 25 | Induktionssensor | | |
| 26 | Erregeranordnung | | |
| 27 | Polanordnung | | |
| 28 | Steuerungsvorrichtung | | |
| 29 | Überwachungsvorrichtung | | |

## Patentansprüche

1. Verfahren zur Bestimmung des Schleifbedarfs von Häckselmessern (8) einer Häckselvorrichtung (6) eines selbstfahrenden Feldhäckslers (1), wobei ein Verschleißzustand durch eine Überwachungsvorrichtung (29) zyklisch bestimmt wird, **dadurch gekennzeichnet, dass** die Überwachungsvorrichtung (29) eine Eingabe-Ausgabe-Einheit (19) umfasst, mittels der ein von einer Schleifvorrichtung (17) herzustellender Soll-Zustand der Häckselmesser (8) als Zielvorgabe eingegeben oder ausgewählt wird, und dass durch die Überwachungsvorrichtung (29) in Abhängigkeit von dem Soll-Zustand und dem bestimmten Verschleißzustand, kontinuierlich, eine Information generiert und durch die Eingabe-Ausgabe-Einheit (19) visualisiert wird, in welchem Maß der aktuell bestimmte Verschleißzustand von dem Soll-Zustand abweicht.

2. Verfahren nach Anspruch 1, **dadurch gekennzeichnet, dass** als Soll-Zustand der Häckselmesser (8) eine Schneidschärfe und/oder eine Anzahl von durchzuführenden Schleifzyklen eingegeben oder ausgewählt wird, nach deren Durchführung eine eingegebene oder ausgewählte Schneidschärfe erreicht wird.

3. Verfahren nach Anspruch 1 oder 2, **dadurch gekennzeichnet, dass** das Maß der Abweichung vom aktuellen Verschleißzustand zum eingegebenen oder ausgewählten Soll-Zustand als ein Betriebsparameter der Schleifvorrichtung (17) visualisiert wird.

4. Verfahren nach Anspruch 1 bis 3, **dadurch gekennzeichnet, dass** von der Eingabe-Ausgabe-Einheit (19) zumindest eine Vergleichsgröße für den einzugebenden oder auszuwählenden Soll-Zustand angezeigt wird.

5. Verfahren nach Anspruch 4, **dadurch gekennzeichnet, dass** als eine Vergleichsgröße die Schneidschärfe im Neuzustand von Häckselmessern (8) und/oder ein an eine spezifische Erntesituation angepasster und optimierter Soll-Zustandswert angezeigt wird.

6. Verfahren nach einem der Ansprüche 3 bis 5, **dadurch gekennzeichnet, dass** als Maß der Abweichung eine Anzahl von durch die Schleifvorrichtung (17) durchzuführender Schleifzyklen zum Erreichen des eingegebenen oder ausgewählten Soll-Zustands verwendet wird.

7. Verfahren nach einem der vorangehenden Ansprüche, **dadurch gekennzeichnet, dass** von der Eingabe-Ausgabe-Einheit (19) Vergleichsbilder (36, 37, 38) für den Verschleißzustand der Häckselmesser (8) angezeigt werden, welche den aktuell bestimmten Verschleißzustand und einen mit dem Soll-Zustand korrespondierenden Verschleißzustand wiedergeben.

8. Verfahren nach Anspruch 7, **dadurch gekennzeichnet, dass** für die Anzeige der den Soll-Zustand wiedergebenden Vergleichsbilder (36, 37, 38) diese in Abhängigkeit von einer Vorgabe für Ernteparametern und/oder Maschinenparametern aus einer in einer Speichereinheit (31) der Überwachungsvorrichtung (29) hinterlegten Datenbank ausgewählt werden.

9. Verfahren nach Anspruch 7 oder 8, **dadurch gekennzeichnet, dass** Vergleichsbilder, die den aktuell bestimmten Verschleißzustand wiedergeben, von einer optischen Erfassungsvorrichtung aufgenommen werden, die insbesondere der Schleifvorrichtung (17) zugeordnet ist.

10. Verfahren nach einem der Ansprüche 6 bis 9, **dadurch gekennzeichnet, dass** die Eingabe-Ausgabe-Einheit (19) einen berührungssensitiven Bildschirm (32) umfasst, und dass bei einer Auswahl eines Vergleichsbildes (36, 37, 38) durch Berührung für die Darstellung von einem Fenstermodus in einen Vollbildmodus oder umgekehrt wechselt wird.

11. Verfahren nach einem der vorangehenden Ansprüche, **dadurch gekennzeichnet, dass** von der Eingabe-Ausgabe-Einheit (19) ein virtuelles Bedienfeld (34) angezeigt wird, mit welchem eine manuelle Auswahl des Soll-Zustand durchgeführt wird.

12. Verfahren nach einem der vorangehenden Ansprüche, **dadurch gekennzeichnet, dass** durch die Eingabe-Ausgabe-Einheit ein virtuelles Bedienfeld (41) angezeigt wird, mit welchem eine manuelle Eingabe des Soll-Zustand durchgeführt wird.

13. Verfahren nach einem der vorangehenden Ansprüche, **dadurch gekennzeichnet, dass** die durch die Eingabe-Ausgabe-Einheit (19) visualisierten Information als ein Zahlenwert, als eine Säule und/oder als ein zeitlicher Verlauf dargestellt werden.

14. Verfahren nach einem der vorangehenden Ansprüche, **dadurch gekennzeichnet, dass** vor der Umsetzung einer Eingabe oder Auswahl des Soll-Zustands eine Berechtigungsabfrage durchgeführt wird.

15. Selbstfahrender Feldhäcksler mit zumindest einer Häckselvorrichtung (6), eine Vielzahl von Häckselmessern (8) umfassend, wobei der Feldhäcksler (1) ausgestaltet zur Verwendung in einem Verfahren nach einem der vorhergehenden Ansprüche ist.

## Claims

1. A method for determining the need for sharpening chopping blades (8) of a chopping device (6) of a self-propelled forage harvester (1), wherein a state of wear is cyclically determined by a monitoring device (29), **characterized in that** the monitoring device (29) comprises an input/output unit (19) by means of which a target state of the chopping blades (8) to be established by a sharpening device (17) is input or selected as a target specification, and **in that** information is continuously generated by the monitoring device (29) as a function of the target state and the determined state of wear and the extent to which the current determined state of wear deviates from the target state is visualized by the input/output unit (19).

2. The method according to claim 1, **characterized in that** a cutting sharpness is input or selected as the target state of the chopping blades (8) and/or a number of sharpening cycles to be executed, after the execution of which an input or selected cutting sharpness is obtained, is input or selected as the target state of the chopping blades (8).

3. The method according to claim 1 or claim 2, **characterized in that** the extent of the deviation of the current state of wear from the input or selected target state is visualized as an operating parameter of the sharpening device (17).

4. The method according to claim 1 to 3, **characterized in that** at least one comparative value for the target state to be input or selected is displayed by the input/output unit (19).

5. The method according to claim 4, **characterized in that** the cutting sharpness in the new state of chopping blades (8) and/or a target state value which is adapted and optimized to a specific harvesting situation is displayed as a comparative value.

6. The method according to one of claims 3 to 5, **characterized in that** a number of sharpening cycles to be executed by the sharpening device (17) in order to obtain the input or selected target state is used as a measure of the deviation.

7. The method according to one of the preceding claims, **characterized in that** comparative images (36, 37, 38) for the state of wear of the chopping blades (8) are displayed by the input/output unit (19), the comparative images representing the current determined state of wear and a state of wear corresponding to the target state.

8. The method according to claim 7, **characterized in that**, for the display of the comparative images (36, 37, 38) representing the target state, these are selected as a function of a specification for harvesting parameters and/or machine parameters from a database stored in a memory unit (31) of the monitoring device (29).

9. The method according to claim 7 or claim 8, **characterized in that** comparative images which represent the current determined state of wear are recorded by an optical detection device, which in particular is associated with the sharpening device (17).

10. The method according to one of claims 6 to 9, **characterized in that** the input/output unit (19) comprises a touch-sensitive display screen (32), and **in that** when a comparative image (36, 37, 38) is selected by touch, the depiction switches from a window mode to a full-screen mode or vice versa.

11. The method according to one of the preceding claims, **characterized in that** a virtual control panel (34) is displayed by the input/output unit (19), with which virtual control panel a manual selection of the target state is made.

12. The method according to one of the preceding claims, **characterized in that** a virtual control panel (41) is displayed by the input/output unit, with which virtual control panel a manual input of the target state is made.

13. The method according to one of the preceding claims, **characterized in that** the information visualized by the input/output unit (19) is depicted as a numerical value, as a bar and/or as a chronological sequence.

14. The method according to one of the preceding claims, **characterized in that** an authorization enquiry is made before the implementation of an input or selection of the target state.

15. A self-propelled forage harvester with at least one chopping device (6) comprising a plurality of chopping blades (8), wherein the forage harvester (1) is designed for use in a method according to one of the preceding claims.

## Revendications

1. Procédé de détermination des besoins d'affûtage de lames de hachage (8) d'un dispositif de hachage (6) d'une récolteuse-hacheuse-chargeuse (1) automotrice, lors duquel un état d'usure est déterminé de manière cyclique par un dispositif de surveillance (29), **caractérisé en ce que** le dispositif de surveillance (29) comprend une unité d'entrée-sortie (19) au moyen de laquelle un état de consigne des lames de hachage (8) devant être obtenu par un dispositif d'affûtage (17) est saisi ou sélectionné en tant qu'objectif visé, et **en ce que** le dispositif de surveillance (29) génère en continu une information en fonction de l'état de consigne et de l'état d'usure déterminé, et que l'unité d'entrée-sortie (19) indique dans quelle mesure l'état d'usure actuellement déterminé s'écarte de l'état de consigne.

2. Procédé selon la revendication 1, **caractérisé en ce que** l'on saisit ou on sélectionne, en tant qu'état de consigne des lames de hachage (8), un degré de tranchant et/ou un nombre de cycles d'affûtage à effectuer, après l'exécution desquels un degré de tranchant saisi ou sélectionné est obtenu.

3. Procédé selon la revendication 1 ou 2, **caractérisé en ce que** la valeur de l'écart de l'état d'usure actuel par rapport à l'état de consigne saisi ou sélectionné est visualisée en tant que paramètre de fonctionnement du dispositif d'affûtage (17).

4. Procédé selon les revendications 1 à 3, **caractérisé en ce que** l'unité d'entrée-sortie (19) affiche au moins une grandeur de comparaison pour l'état de consigne à saisir ou à sélectionner.

5. Procédé selon la revendication 4, **caractérisé en ce que** l'on affiche en tant que grandeur de comparaison, le degré de tranchant à l'état neuf de lames de hachage (8) et/ou une valeur d'état de consigne adaptée à une situation de récolte spécifique, et optimisée.

6. Procédé selon une des revendications 3 à 5, **caractérisé en ce que** l'on utilise en tant que valeur de l'écart, un nombre de cycles d'affûtage devant être effectués par le dispositif d'affûtage (17) pour atteindre l'état de consigne saisi ou sélectionné.

7. Procédé selon une des revendications précédentes, **caractérisé en ce que** l'unité d'entrée-sortie (19) affiche des images de comparaison (36, 37, 38) pour l'état d'usure des lames de hachage (8), qui reproduisent l'état d'usure actuellement déterminé et un état d'usure correspondant à l'état de consigne.

8. Procédé selon la revendication 7, **caractérisé en ce que** pour l'affichage des images de comparaison (36, 37, 38) reproduisant l'état de consigne, celles-ci sont sélectionnées dans une base de données stockée dans une unité de mémoire (31) du dispositif de surveillance (29), en fonction d'une consigne pour des paramètres de récolte et/ou des paramètres de machine.

9. Procédé selon la revendication 7 ou 8, **caractérisé en ce que** des images de comparaison reproduisant l'état d'usure actuellement déterminé sont enregistrées par un dispositif de détection optique qui est associé notamment au dispositif d'affûtage (17).

10. Procédé selon une des revendications 6 à 9, **caractérisé en ce que** l'unité d'entrée-sortie (19) comprend un écran tactile (32), et **en ce que** lors d'une sélection d'une image de comparaison (36, 37, 38) par contact, la visualisation passe d'un mode fenêtre à un mode plein écran ou inversement.

11. Procédé selon une des revendications précédentes, **caractérisé en ce que** l'unité d'entrée-sortie (19) affiche un panneau de commande virtuel (34) par le biais duquel on procède à une sélection manuelle de l'état de consigne.

12. Procédé selon une des revendications précédentes, **caractérisé en ce que** l'unité d'entrée-sortie affiche un panneau de commande virtuel (41) par le biais duquel on procède à une saisie manuelle de l'état de consigne.

13. Procédé selon une des revendications précédentes, **caractérisé en ce que** les informations visualisées par l'unité d'entrée-sortie (19) sont représentées sous forme de valeur numérique, de colonne et/ou d'une variation dans le temps.

14. Procédé selon une des revendications précédentes, **caractérisé en ce que**, avant la mise en œuvre d'une saisie ou d'une sélection de l'état de consigne, une demande d'autorisation est émise.

15. Récolteuse-hacheuse-chargeuse automotrice dotée d'au moins un dispositif de hachage (6) comportant une pluralité de lames de hachage (8), la récolteuse-hacheuse-chargeuse (1) étant agencée en vue d'une utilisation dans un procédé selon une des revendications précédentes.
